# DEMANDE DE BREVET EUROPEEN

(11) **EP 4 470 920 A1**
(43) Date de publication de la demande: **04.12.2024**
(21) Numéro de dépôt: 24174418.4
(22) Date de dépôt: 07.05.2024
(51) Int. Cl.: B64D 29/06, B64D 33/02

(54) **ENSEMBLE DE PROPULSION D'AÉRONEF COMPORTANT AU MOINS UN PANNEAU AÉRODYNAMIQUE SUPPORTÉ PAR AU MOINS UN SUPPORT RADIAL INTERMÉDIAIRE, AÉRONEF COMPRENANT AU MOINS UN TEL ENSEMBLE DE PROPULSION**

(30) Priorité: 29.05.2023 FR 2305313
(71) Demandeur: AIRBUS OPERATIONS (S.A.S.), 31060 Toulouse (FR)
(72) Inventeur: RENAUD, Eric, 31300 TOULOUSE (FR); DEFORET, Thomas, 31060 TOULOUSE (FR); KALETA, Mathieu, 31300 TOULOUSE (FR); CLAVEYROLLAS, Antoine, 31060 TOULOUSE (FR); MAHE, Mathieu, 31060 TOULOUSE (FR); TORRES LOPEZ, Ginesa, 31300 TOULOUSE (FR)
(74) Mandataire: Fantin, Laurent

(57) **Abrégé**

L'invention a pour objet un ensemble de propulsion comprenant un carter de soufflante (64) ainsi qu'une nacelle (62) qui comprend une entrée d'air (66) reliée à l'extrémité avant (64.1) du carter de soufflante (64), un tronçon intermédiaire (68) positionné autour du carter de soufflante (64) et un tronçon arrière (70) coopérant avec l'extrémité arrière (64.2) du carter de soufflante (64). Le tronçon intermédiaire (68) comprend au moins un panneau aérodynamique (84) qui s'étend d'un bord avant (68.1) accolé à l'entrée d'air (66) jusqu'à un bord arrière (68.1) accolé au tronçon arrière (70) ainsi qu'au moins un support radial intermédiaire (86) comportant un bord intérieur (86.1) relié au carter de soufflante (64) et un bord extérieur (86.2) relié au panneau aérodynamique (84), ce dernier comportant un bord avant (84.1) relié à l'entrée d'air (66) par un premier système de liaison (102).

## Description

La présente demande se rapporte à un ensemble de propulsion d'aéronef comportant au moins un panneau aérodynamique supporté par au moins un support radial intermédiaire ainsi qu'à un aéronef comprenant au moins un tel ensemble de propulsion.

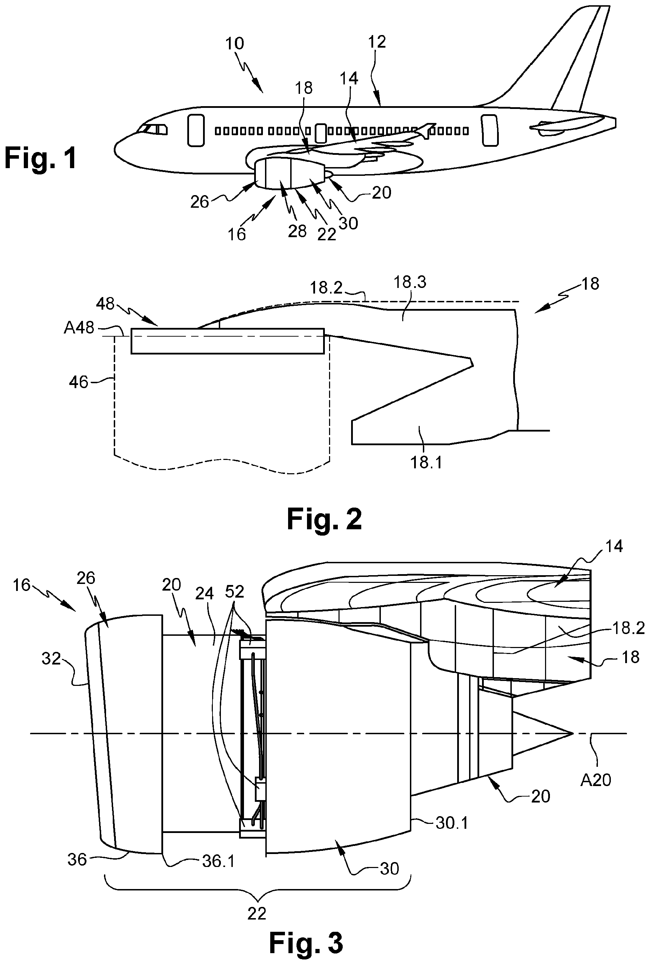

Selon un mode de réalisation visible sur la figure 1, un aéronef 10 comprend un fuselage 12, une voilure 14, au moins un ensemble de propulsion 16 ainsi qu'au moins un mât 18 reliant l'ensemble de propulsion 16 et la voilure 14.

Comme illustré sur la figure 3, l'ensemble de propulsion 16 comprend une motorisation 20 présentant un axe de motorisation A20 ainsi qu'une nacelle 22 positionnée autour de la motorisation 20.

Pour la présente demande, une direction longitudinale est une direction parallèle à l'axe de motorisation A20. Une direction radiale est une direction perpendiculaire à l'axe de motorisation A20. Un plan longitudinal est un plan contenant l'axe de motorisation A20. Un plan transversal est un plan perpendiculaire à l'axe de motorisation A20. Les termes avant/amont et arrière/aval font référence au sens d'écoulement de l'air qui pénètre dans la nacelle 22 et s'écoule de l'amont vers l'aval.

Comme illustré sur la figure 2, le mât 18 comprend une structure primaire 18.1 reliant la motorisation 20 et la voilure 14, un carénage 18.2 ainsi qu'une structure secondaire 18.3 supportant notamment le carénage 18.2 et des équipements.

La motorisation 20 comprend une soufflante ainsi qu'un carter de soufflante 24, entourant la soufflante, qui s'étend entre une extrémité avant 24.1 et une extrémité arrière 24.2.

La nacelle 22 comprend une entrée d'air 26, un tronçon intermédiaire 28 situé autour du carter de soufflante 24 ainsi qu'un tronçon arrière 30 qui s'étend entre le tronçon intermédiaire 28 et un bord de fuite 30.1. Ce tronçon arrière 30 comprend un dispositif d'inversion de poussée.

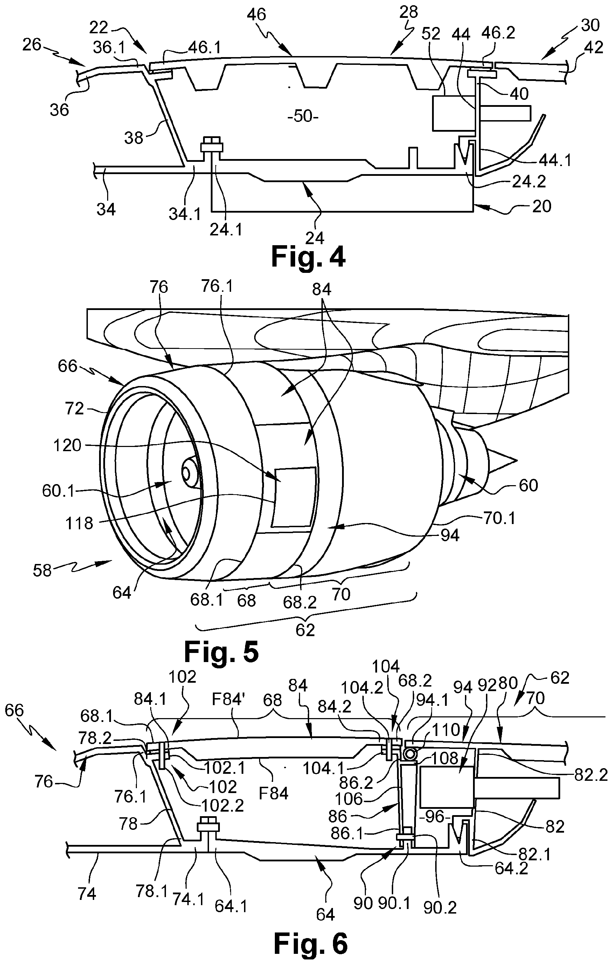

Comme illustré sur les figures 3 et 4, l'entrée d'air 26 comprend une lèvre 32 située à l'avant, un conduit intérieur 34 qui prolonge la lèvre 32 vers l'intérieur de la nacelle 22 jusqu'à un bord arrière intérieur 34.1 relié à l'extrémité avant 24.1 du carter de soufflante 24, une paroi extérieure 36 qui prolonge la lèvre 32 vers l'extérieur de la nacelle 22 jusqu'à un bord arrière extérieur 36.1 ainsi qu'un premier cadre annulaire 38 reliant les bords arrière intérieur et extérieur 34.1 et 36.1.

Le tronçon arrière 30 comprend un support 40 ainsi qu'une partie mobile 42 configurée pour se déplacer longitudinalement d'avant en arrière afin de générer au moins une ouverture latérale pour le dispositif d'inversion de poussée. Le support 40 comprend un deuxième cadre annulaire 44 qui présente un bord intérieur 44.1 coopérant avec l'extrémité arrière 24.2 du carter de soufflante 24.

Le tronçon arrière 30 est approximativement tubulaire ou tronconique et composé de deux demi-tronçons en C sensiblement symétriques par rapport à un plan longitudinal vertical. Chaque demi-tronçon comprend un bord supérieur relié à la structure secondaire 18.3 du mât 18 par une articulation qui présente un axe de pivotement sensiblement parallèle à la direction longitudinale. Ainsi, chaque demi-tronçon en C peut pivoter entre une position fermée dans laquelle les bords inférieurs des demi-tronçons en C sont jointifs et maintenus en position fermée par un système de verrouillage ainsi qu'une position ouverte dans laquelle les bords inférieurs des demi-tronçons en C sont espacés et permettent d'accéder à la motorisation 20.

Le tronçon intermédiaire 28 comprend deux capots 46 en C sensiblement symétriques par rapport à un plan longitudinal vertical. Chaque capot 46 comprend un bord supérieur relié à la structure secondaire 18.3 du mât 18 par une articulation 48 (visible sur la figure 2) qui présente un axe de pivotement A48 sensiblement parallèle à la direction longitudinale. Ainsi, chaque capot 46 peut pivoter entre une position fermée dans laquelle les bords inférieurs des capots 46 sont jointifs et maintenus en position fermée par un système de verrouillage et une position ouverte dans laquelle les bords inférieurs des capots 46 sont espacés et permettent d'accéder à la motorisation 20 ainsi qu'à une zone technique 50 située entre les capots 46, le carter de soufflante 24 et les premier et deuxième cadres annulaires 38, 44. Certains équipements 52 du dispositif d'inversion de poussée, comme des actionneurs par exemple, sont positionnés dans cette zone technique 50 et répartis sur la circonférence de la nacelle 22.

Selon une configuration visible sur la figure 4, chaque capot 46 s'étend entre un bord avant 46.1 qui repose en position fermée contre un rebord solidaire du premier cadre annulaire 38 de l'entrée d'air 26 ainsi qu'un bord arrière 46.2 qui repose en position fermée contre un rebord solidaire du deuxième cadre annulaire 44 du tronçon arrière 38.

Ce mode de réalisation n'est pas pleinement satisfaisant pour les raisons suivantes.

Le fait que les capots 46 soient reliés à la structure secondaire 18.3 du mât 18 impose de prolonger la structure secondaire 18.3 et le carénage 18.2 du mât 18 vers l'avant, ce qui induit une augmentation de la masse de l'aéronef.

Selon un autre inconvénient, il est nécessaire de pivoter les capots 46 en position ouverte afin de pouvoir ouvrir les demi-tronçons en C du tronçon arrière 30.

Les capots 46 étant articulés au niveau de leurs bords supérieurs, leurs bords avant et arrière 46.1, 46.2 ne sont pas reliés au reste de la nacelle par des éléments de liaison et reposent seulement contre des rebords. Par conséquent, il existe des risques d'écopage, notamment via le bord avant 46.1 des capots 46, peuvant provoquer une ouverture accidentelle des capots 46 en vol et leur endommagement.

La présente invention vise à remédier à tout ou partie des inconvénients de l'art antérieur.

A cet effet, l'invention a pour objet un ensemble de propulsion comprenant un carter de soufflante qui s'étend entre des extrémités avant et arrière ainsi qu'une nacelle qui comprend, d'avant en arrière, une entrée d'air reliée à l'extrémité avant du carter de soufflante, un tronçon intermédiaire positionné autour du carter de soufflante et un tronçon arrière coopérant avec l'extrémité arrière du carter de soufflante, le tronçon intermédiaire s'étendant entre un bord avant accolé à l'entrée d'air et un bord arrière accolé au tronçon arrière et comprenant au moins un panneau aérodynamique qui s'étend du bord avant jusqu'au bord arrière du tronçon intermédiaire.

Selon l'invention, le tronçon intermédiaire comprend au moins un support radial intermédiaire comportant un bord intérieur relié au carter de soufflante et un bord extérieur relié au panneau aérodynamique, ce dernier comportant un bord avant relié à l'entrée d'air par un premier système de liaison.

Selon un premier avantage procuré par l'invention, aucun panneau aérodynamique du tronçon intermédiaire n'est supporté par la structure secondaire du mât, contrairement aux capots de l'art antérieur. Par conséquent, la structure secondaire du mât peut être raccourcie, ce qui conduit à réduire sa masse. Selon un autre avantage, les panneaux aérodynamiques étant fixes, aucune articulation n'est prévue pour les faire pivoter, ce qui permet de réduire la masse de l'ensemble de propulsion.

Selon une autre caractéristique, l'entrée d'air comprend une lèvre située à l'avant, un conduit intérieur qui prolonge la lèvre vers l'intérieur de la nacelle, une première paroi extérieure qui prolonge la lèvre vers l'extérieur de la nacelle ainsi qu'un premier cadre annulaire présentant un bord intérieur relié au conduit intérieur et un bord extérieur relié à la première paroi extérieure. En complément, le premier système de liaison comprend au moins un premier rebord solidaire du premier cadre annulaire et positionné au niveau ou proche du bord extérieur du premier cadre annulaire ainsi que plusieurs éléments de liaison, reliant le panneau aérodynamique et le premier rebord, répartis sur au moins une partie de la circonférence de la nacelle.

Selon une autre caractéristique, chaque panneau aérodynamique comprend un bord arrière relié par un deuxième système de liaison au support radial intermédiaire. En complément, le deuxième système de liaison comprend au moins un deuxième rebord solidaire du support radial intermédiaire et positionné au niveau ou proche du bord extérieur du support radial intermédiaire ainsi que plusieurs éléments de liaison, reliant le panneau aérodynamique et le deuxième rebord, répartis sur au moins une partie de la circonférence de la nacelle.

Selon une autre caractéristique, le tronçon arrière comprend au moins une deuxième paroi extérieure ainsi qu'au moins un deuxième cadre annulaire présentant un bord intérieur qui coopère avec l'extrémité arrière du carter de soufflante et un bord extérieur relié à la deuxième paroi extérieure. En complément, le support radial intermédiaire est espacé du deuxième cadre annulaire du tronçon arrière, la deuxième paroi extérieure du tronçon arrière comprenant au moins un prolongement qui s'étend à l'avant du deuxième cadre annulaire et présente un bord avant faiblement espacé du (ou des) panneau(x) aérodynamique(s).

Selon une autre caractéristique, le prolongement a une forme demi-cylindrique. En complément, le tronçon arrière comprend plusieurs équerres, reliant le deuxième cadre annulaire et le prolongement, réparties sur la circonférence de la nacelle.

Selon une autre caractéristique, le support radial intermédiaire comprend une âme positionnée approximativement dans un plan transversal ainsi qu'au moins une aile arrière, décalée vers l'arrière par rapport à l'âme, formant une surface d'appui pour le prolongement du tronçon arrière.

Selon une autre caractéristique, l'ensemble de propulsion comprend au moins un joint d'étanchéité intercalé entre l'aile arrière et le prolongement du tronçon arrière.

Selon une autre caractéristique, le tronçon intermédiaire comprend plusieurs panneaux aérodynamiques, accolés les uns aux autres, répartis sur la circonférence de la nacelle. Selon une autre caractéristique, le tronçon intermédiaire comprend au moins un raidisseur longitudinal qui présente une première extrémité reliée à l'entrée d'air ainsi qu'une deuxième extrémité reliée au support radial intermédiaire.

Selon une autre caractéristique, le tronçon intermédiaire comprend autant de raidisseurs longitudinaux que de panneaux aérodynamiques, chaque raidisseur longitudinal étant positionné au niveau d'une zone de jonction de deux panneaux aérodynamiques et configuré pour former une surface d'appui à un premier bord longitudinal d'un premier panneau aérodynamique ainsi qu'à un deuxième bord longitudinal d'un deuxième panneau.

Selon une autre caractéristique, chaque panneau aérodynamique présente une face intérieure orientée vers le carter de soufflante, un bord avant positionné dans un premier plan transversal, un bord arrière positionné dans un deuxième plan transversal, un premier bord longitudinal positionné dans un premier plan longitudinal ainsi qu'un deuxième bord longitudinal positionné dans un deuxième plan longitudinal. En complément, chaque panneau aérodynamique comprend, au niveau de sa face intérieure, une partie centrale renforcée, espacée des bords et formant une surépaisseur par rapport aux bords.

Selon une autre caractéristique, le tronçon intermédiaire comprend, pour chaque panneau aérodynamique, au moins un système de centrage configuré pour positionner chaque panneau aérodynamique lors de son montage.

Selon une autre caractéristique, le système de centrage comprend, pour chaque panneau aérodynamique, au moins un pion de centrage solidaire du panneau aérodynamique ainsi que, pour chaque pion de centrage, au moins un orifice de centrage, configuré pour coopérer avec le pion de centrage, prévu au niveau d'un élément solidaire du carter de soufflante.

Selon une autre caractéristique, le support radial intermédiaire s'étend sur toute la circonférence de la nacelle et comprend plusieurs évidements.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe longitudinale schématique d'un mât d'aéronef illustrant un mode de réalisation de l'art antérieur,
- La figure 3 est une vue latérale d'un ensemble de propulsion d'un aéronef, sans capots, illustrant un mode de réalisation de l'art antérieur,
- La figure 4 est une coupe longitudinale schématique d'une partie d'un ensemble de propulsion illustrant un mode de réalisation de l'art antérieur,
- La figure 5 est une vue en perspective d'un ensemble de propulsion illustrant un mode de réalisation de l'invention,
- La figure 6 est une coupe longitudinale schématique d'une partie d'un ensemble de propulsion illustrant un mode de réalisation de l'invention, le tronçon arrière de la nacelle étant en position fermée,
- La figure 7 est une coupe longitudinale schématique de la partie de l'ensemble de propulsion visible sur la figure 6, le tronçon arrière de la nacelle étant en position ouverte,
- La figure 8 est une vue en perspective schématique d'une partie d'un ensemble de propulsion illustrant un mode de réalisation de l'invention,
- La figure 9 est une coupe longitudinale schématique d'une partie d'un ensemble de propulsion illustrant un autre mode de réalisation de l'invention,
- La figure 10 est une vue en perspective d'un panneau aérodynamique d'une nacelle d'aéronef illustrant un mode de réalisation de l'invention,
- La figure 11 est une vue en perspective d'une partie d'un tronçon arrière d'une nacelle d'aéronef illustrant un mode de réalisation de l'invention,
- La figure 12 est une vue en perspective d'un tronçon intermédiaire d'une nacelle d'aéronef illustrant un mode de réalisation de l'invention.

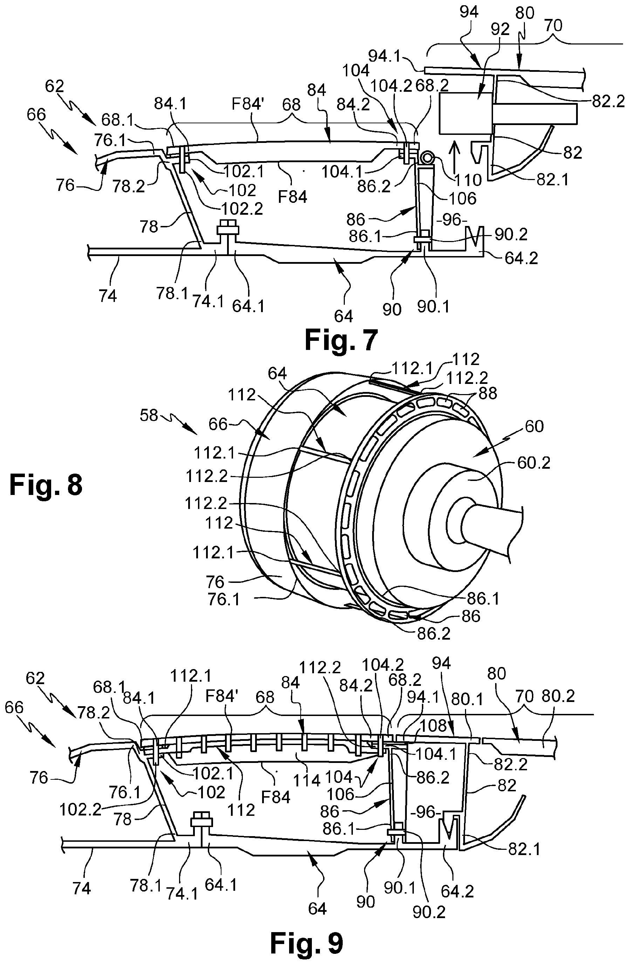

Selon un mode de réalisation visible sur les figures 5 et 8, un ensemble de propulsion 58 comprend une motorisation 60 ainsi qu'une nacelle 62 positionnée autour de la motorisation 60.

Selon une application, un aéronef comprend un fuselage, une voilure, au moins un ensemble de propulsion 58 positionné sous la voilure ainsi qu'au moins un mât reliant l'ensemble de propulsion 58 et la voilure. Le mât comprend une structure primaire reliant la motorisation 60 et la voilure, un carénage ainsi qu'une structure secondaire supportant notamment le carénage et des équipements.

La motorisation 60 comprend une soufflante 60.1, un coeur de réacteur 60.2 ainsi qu'un carter de soufflante 64 tubulaire, entourant la soufflante 60.1, qui s'étend entre une extrémité avant 64.1 et une extrémité arrière 64.2.

La nacelle 62 comprend une entrée d'air 66, un tronçon intermédiaire 68 situé autour du carter de soufflante 64 ainsi qu'un tronçon arrière 70 qui s'étend entre le tronçon intermédiaire 68 et un bord de fuite 70.1. Selon une configuration, la nacelle 62 comprend un dispositif d'inversion de poussée positionné essentiellement dans le tronçon arrière 70. Le tronçon intermédiaire 68 s'étend entre un bord avant 68.1 accolé à l'entrée d'air 66 et un bord arrière 68.2 accolé au tronçon arrière 70.

Comme illustré sur les figures 5, 6, 7 et 9, l'entrée d'air 66 comprend une lèvre 72 située à l'avant, un conduit intérieur 74 qui prolonge la lèvre 72 vers l'intérieur de la nacelle 72 jusqu'à un bord arrière intérieur 74.1 relié à l'extrémité avant 64.1 du carter de soufflante 64, une première paroi extérieure 76 qui prolonge la lèvre 72 vers l'extérieur de la nacelle 62 jusqu'à un bord arrière extérieur 76.1 ainsi qu'un premier cadre annulaire 78 reliant les bords arrière intérieur et extérieur 74.1 et 76.1. Ainsi, ce premier cadre annulaire 78 comprend un bord intérieur 78.1 relié au bord arrière intérieur 74.1 du conduit intérieur ainsi qu'un bord extérieur 78.2 relié au bord arrière extérieur 76.1 de la première paroi extérieure 76.

Selon un mode de réalisation, le tronçon arrière 70 comprend au moins une deuxième paroi extérieure 80 ainsi qu'au moins un deuxième cadre annulaire 82 présentant un bord intérieur 82.1 qui coopère avec l'extrémité arrière 64.2 du carter de soufflante 64 et un bord extérieur 82.2 relié à la deuxième paroi extérieure 80. Cette dernière est décalée vers l'arrière par rapport au deuxième cadre annulaire 82.

Selon une configuration visible sur la figure 9, la deuxième paroi extérieure 80 comprend un tronçon amont 80.1 solidaire du deuxième cadre annulaire 82 ainsi qu'un tronçon aval 80.2 séparé du tronçon amont 80.1, le tronçon aval 80.2 étant mobile, selon une direction parallèle à la direction longitudinale, entre une position fermée dans laquelle le tronçon aval 80.2 est faiblement espacé du tronçon amont 80.1 ainsi qu'une position ouverte dans laquelle le tronçon aval 80.2 est écarté du tronçon amont 80.1, ce qui génère au moins une ouverture latérale pour le dispositif d'inversion de poussée.

Selon un mode de réalisation, le tronçon arrière 70 est approximativement tubulaire ou tronconique et composé de deux demi-tronçons en C sensiblement symétriques par rapport à un plan longitudinal vertical, chacun d'eux s'étendant entre un bord supérieur et un bord inférieur. Le bord supérieur de chaque demi-tronçon en C est relié à la structure secondaire du mât par une articulation qui présente un axe de pivotement sensiblement parallèle à la direction longitudinale. Ainsi, chaque demi-tronçon en C peut pivoter entre une position fermée dans laquelle les bords inférieurs des demi-tronçons en C sont jointifs et maintenus en position fermée par un système de verrouillage et une position ouverte dans laquelle les bords inférieurs des demi-tronçons en C sont espacés et permettent d'accéder à la motorisation 60. La motorisation 60, l'entrée d'air 66 et le tronçon arrière 70 ne sont pas plus décrits car ils peuvent être identiques à ceux de l'art antérieur. Quel que soit le mode de réalisation, l'ensemble de propulsion 58 comprend un carter de soufflante 64 qui s'étend entre des extrémités avant et arrière 64.1, 64.2 ainsi qu'une nacelle 62 qui comprend, d'avant en arrière, une entrée d'air 66 reliée à l'extrémité avant 64.1 du carter de soufflante 64, un tronçon intermédiaire 68 positionné autour du carter de soufflante 64 et un tronçon arrière 70 coopérant avec l'extrémité arrière 64.2 du carter de soufflante 64.

Selon une caractéristique, le tronçon intermédiaire 68 comprend au moins un panneau aérodynamique 84 qui s'étend du bord avant 68.1 du tronçon intermédiaire 68 jusqu'au bord arrière 68.2 du tronçon intermédiaire 68 ainsi qu'au moins un support radial intermédiaire 86, positionné entre les premier et deuxième cadres annulaires 78, 82, qui présente un bord intérieur 86.1 relié au carter de soufflante 64 et un bord extérieur 86.2 relié au panneau aérodynamique 84. Selon une configuration, le support radial intermédiaire 86 est plus proche du bord arrière 68.2 que du bord avant 68.1.

Ainsi, contrairement aux capots de l'art antérieur, aucun panneau aérodynamique du tronçon intermédiaire 68 n'est supporté par la structure secondaire du mât. Par conséquent, cette dernière peut être raccourcie, ce qui conduit à réduire sa masse. Selon un autre aspect, contrairement aux capots pivotants de l'art antérieur, les panneaux aérodynamiques sont fixes. Ainsi, aucune articulation n'est prévue pour faire pivoter les capots, ce qui permet de réduire la masse de l'ensemble de propulsion.

Selon une configuration, le support radial intermédiaire 86 s'étend sur toute la circonférence de la nacelle 62, tout autour du carter de soufflante 64. Selon cette configuration, le support radial intermédiaire 86 est un support radial annulaire. Selon les cas, le support radial intermédiaire 86 est constitué d'une seule pièce ou de plusieurs secteurs angulaires reliés entre eux. Selon un mode de réalisation, le support radial intermédiaire 86 comprend plusieurs évidements 88 pour réduire sa masse.

Selon un mode de réalisation, l'ensemble de propulsion 58 comprend une première liaison 90 reliant le bord intérieur 86.1 du support radial intermédiaire 86 et le carter de soufflante 64. Selon une configuration, la première liaison 90 comprend une collerette 90.1, solidaire du carter de soufflante 64 et positionnée sensiblement dans un plan transversal, contre laquelle est plaqué le bord intérieur 86.1 du support radial intermédiaire 86 ainsi que des éléments de fixation 90.2, orientés longitudinalement, traversant la collerette 90.1 et le support radial intermédiaire 86 et les reliant. Bien entendu, l'invention n'est pas limitée à ce mode de réalisation pour la première liaison 90.

Selon un agencement, l'ensemble de propulsion 58 comprend au moins un équipement 92, comme un actionneur par exemple, solidaire du tronçon arrière 70 et positionné à l'avant du deuxième cadre annulaire 82 du tronçon arrière 70. Selon cet agencement, le support radial intermédiaire 86 est espacé du deuxième cadre annulaire 82 du tronçon arrière 70 d'une distance suffisante pour loger le (ou les) équipement(s) 92.

Selon cet agencement, la deuxième paroi extérieure 80 du tronçon arrière 70 comprend au moins un prolongement 94 qui s'étend à l'avant du deuxième cadre annulaire 82 et présente un bord avant 94.1 faiblement espacé du (ou des) panneau(x) aérodynamique(s) 84. Ce prolongement 94 permet de fermer une zone 96 délimitée par le support radial intermédiaire 86, le deuxième cadre annulaire 82 du tronçon arrière 70 et le carter de soufflante 64 et dans laquelle sont positionnés le (ou les) équipement(s) 92. Le prolongement 94 présente une longueur (dimension prise selon une direction parallèle à la direction longitudinale) comprise entre 5 et 60 cm.

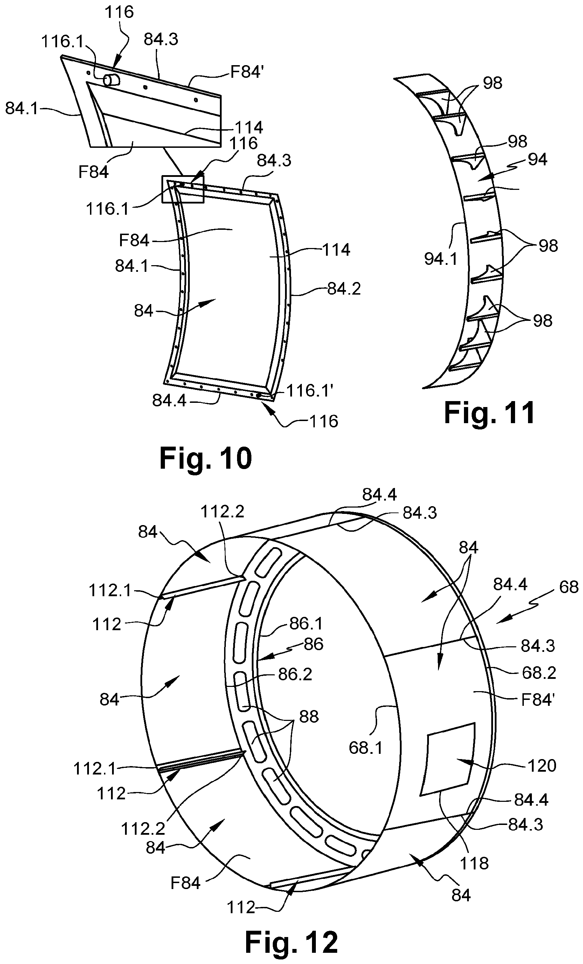

Selon un mode de réalisation visible sur la figure 11, le prolongement 94 a une forme demi-cylindrique. En complément, le tronçon arrière 70 comprend plusieurs équerres 98, reliant le deuxième cadre annulaire 82 et le prolongement 94, réparties sur la circonférence de la nacelle 62 et positionnées dans des plans longitudinaux. Ces équerres 98 permettent de rigidifier le prolongement 94. Selon une configuration, le tronçon arrière 70 comprend deux prolongements 94, un pour chaque demi-tronçon en C du tronçon arrière 70.

Selon un mode de réalisation visible sur les figures 10 et 12, le tronçon intermédiaire 68 comprend plusieurs panneaux aérodynamiques 84 fixes, accolés les uns aux autres, répartis sur la circonférence de la nacelle 62, chacun d'eux s'étendant entre les bords avant et arrière 68.1, 68.2 du tronçon intermédiaire 68.

Selon un agencement donné à titre d'exemple et non limitatif, le tronçon intermédiaire 68 comprend six panneaux aérodynamiques 84, trois de part et d'autre du plan longitudinal vertical.

Chaque panneau aérodynamique 84 présente une face intérieure F84 orientée vers le carter de soufflante 64, une face extérieure F84' opposée à la face intérieure F84, un bord avant 84.1 positionné dans un premier plan transversal, un bord arrière 84.2 positionné dans un deuxième plan transversal, un premier bord longitudinal 84.3 positionné dans un premier plan longitudinal ainsi qu'un deuxième bord longitudinal 84.4 positionné dans un deuxième plan longitudinal.

Pour chaque panneau aérodynamique 84, son bord avant 84.1 est relié par un premier système de liaison 102 à l'entrée d'air 66, plus particulièrement au premier cadre annulaire 78 de l'entrée d'air 66. Le bord arrière 84.2 de chaque panneau aérodynamique 84 est relié par un deuxième système de liaison 104 au support radial intermédiaire 86.

Le fait que le bord avant 84.1 de chaque panneau aérodynamique 84 soit relié à l'entrée d'air 66 permet de limiter les risques d'écopage et d'ouverture accidentelle des panneaux aérodynamiques 84.

Selon un mode de réalisation, le premier système de liaison 102 comprend au moins un premier rebord 102.1 solidaire du premier cadre annulaire 78, positionné au niveau ou proche du bord extérieur 78.2 du premier cadre annulaire 78, contre lequel est plaqué au moins un des panneaux aérodynamiques 84 ainsi que plusieurs éléments de liaison 102.2, reliant le panneau aérodynamique 84 et le premier rebord 102.1, répartis sur au moins une partie de la circonférence de la nacelle 62. Selon un agencement, le premier rebord 102.1 s'étend, de manière continue ou discontinue, sur toute la circonférence de la nacelle 62 et a une forme cylindrique. Le premier rebord 102.1 et les panneaux aérodynamiques 84 sont configurés de manière à ce que la surface extérieure F84' de chaque panneau aérodynamique 84 affleure celle de la première paroi extérieure 76 de l'entrée d'air 66. Des cales peuvent être intercalées entre le (ou les) panneau(x) aérodynamique(s) et le premier rebord 102.1.

Selon un mode de réalisation, le deuxième système de liaison 104 comprend au moins un deuxième rebord 104.1 solidaire du support radial intermédiaire 86, positionné au niveau ou proche du bord extérieur 86.2 du support radial intermédiaire 86, contre lequel est plaqué au moins un des panneaux aérodynamiques 84 ainsi que plusieurs éléments de liaison 104.2, reliant le panneau aérodynamique 84 et le deuxième rebord 104.1, répartis sur au moins une partie de la circonférence de la nacelle 62. Selon un agencement, le deuxième rebord 104.1 s'étend, de manière continue ou discontinue, sur toute la circonférence de la nacelle 62 et a une forme cylindrique. Le deuxième rebord 104.1 et chaque panneau aérodynamique 84 sont configurés de manière à ce que la surface extérieure F84' de chaque panneau aérodynamique 84 affleure celle de la deuxième paroi extérieure 80 du tronçon arrière 70. Des cales peuvent être intercalées entre le (ou les) panneau(x) aérodynamique(s) et le deuxième rebord 104.1 Selon une configuration, les éléments de liaison 102.2, 104.2 sont démontables et répartis tout autour de la nacelle 62.

Selon un mode de réalisation visible sur les figures 6 et 7, le support radial intermédiaire 86 comprend :
- une âme 106 positionnée approximativement dans un plan transversal,
- au moins une aile avant, décalée vers l'avant par rapport à l'âme 106, formant le deuxième support 104.1 pour supporter les panneaux aérodynamiques 84,
- au moins une aile arrière 108, décalée vers l'arrière par rapport à l'âme 106, formant une surface d'appui pour la deuxième paroi extérieure 80 du tronçon arrière 70 et plus particulièrement pour son prolongement 94 lorsque les demi-tronçons en C du tronçon arrière 70 sont en position fermée.

Chacune des ailes avant et arrière s'étend, dans un plan longitudinal, perpendiculairement à l'âme 106. Dans un plan transversal, chacune des ailes avant et arrière suit la courbure des panneaux aérodynamiques 84 et de la troisième paroi extérieure 80. Selon un agencement, chacune des ailes avant et arrière s'étend sur toute la circonférence de la nacelle 62. L'âme 106 comprend les évidements 88.

Selon un mode de réalisation, l'ensemble de propulsion 58 comprend au moins un joint d'étanchéité 110 solidaire de l'aile arrière 108, intercalé entre cette dernière et la deuxième paroi extérieure 80 du tronçon arrière 70 et plus particulièrement son prolongement 94. Ce joint d'étanchéité 110 s'étend au moins sur une partie de la circonférence de la nacelle 62. Selon une configuration, le tronçon intermédiaire 68 comprend au moins un raidisseur longitudinal 112 qui présente une première extrémité 112.1 reliée à l'entrée d'air 66, plus particulièrement au bord extérieur 78.2 du premier cadre annulaire 78 de l'entrée d'air 66, ainsi qu'une deuxième extrémité 112.2 reliée au support radial intermédiaire 86, plus particulièrement à son bord extérieur 86.2, chaque raidisseur longitudinal 112 formant une surface d'appui pour au moins un des panneaux aérodynamiques 84.

Selon un agencement, la première extrémité 112.1 de chaque raidisseur longitudinal 112 est reliée au premier rebord 102.1, la première extrémité 112.1 étant intercalée entre le premier rebord 102.1 et le (ou les) panneau(x) aérodynamique(s) 84. La deuxième extrémité 112.2 de chaque raidisseur longitudinal 112 est reliée au deuxième rebord 104.1, ce dernier étant intercalé entre la deuxième extrémité 112.2 et le panneau aérodynamique 84.

Selon un mode de réalisation, le tronçon intermédiaire 68 comprend autant de raidisseurs longitudinaux 112 que de panneaux aérodynamiques 84, chaque raidisseur longitudinal 112 étant positionné au niveau d'une zone de jonction de deux panneaux aérodynamiques 84 et configuré pour former une surface d'appui à un premier bord longitudinal 84.3 d'un premier panneau aérodynamique 84 et à un deuxième bord longitudinal 84.4 d'un deuxième panneau 84.

Selon ce mode de réalisation, pour chaque panneau aérodynamique 84, les premier et deuxième rebords 102.1, 104.1 ainsi que les raidisseurs longitudinaux 112 forment des cadres contre lesquels prennent appui les bords 84.1, 84.2, 84.3, 84.4 des panneaux aérodynamiques 84.

En complément, chaque panneau aérodynamique 84 comprend, au niveau de sa face intérieure F84, une partie centrale 114 renforcée, espacée des bords 84.1, 84.2, 84.3 et 84.4 et formant une surépaisseur par rapport aux bords 84.1, 84.2, 84.3 et 84.4. Cette partie centrale 114 présente une forme pyramidale tronquée pour faciliter le positionnement du panneau aérodynamique 84 par rapport aux cadres formés par les premier et deuxième rebords 102.1, 104.1 ainsi que les raidisseurs longitudinaux 112.

Selon un mode de réalisation, le tronçon intermédiaire 68 comprend, pour chaque panneau aérodynamique 84, au moins un système de centrage 116 configuré pour positionner chaque panneau aérodynamique 84 lors de son montage. Selon un mode de réalisation, le système de centrage 116 comprend, pour chaque panneau aérodynamique 84, au moins un pion de centrage 116.1 solidaire du panneau aérodynamique 84 et en saillie par rapport à sa face intérieure F84 ainsi que, pour chaque pion de centrage 116.1, au moins un orifice de centrage, configuré pour coopérer avec le pion de centrage 116, prévu au niveau d'un élément solidaire du carter de soufflante 64 parmi les premier et deuxième rebords 102.1, 104.1 et les raidisseurs longitudinaux 112. Selon un mode de réalisation, chaque panneau aérodynamique 84 comprend des premier et deuxième pions de centrage 116.1, 116.1', le premier pion de centrage 116.1 étant positionné au niveau du premier bord longitudinal 84.3 à proximité du bord avant 84.1, le deuxième pion de centrage 116.1' étant positionné au niveau du deuxième bord longitudinal 84.4 à proximité du bord arrière 84.2. En complément, chaque raidisseur longitudinal 112 comprend un premier orifice de centrage configuré pour recevoir le premier pion de centrage 116.1 d'un premier panneau aérodynamique 84 ainsi qu'un deuxième orifice de centrage configuré pour recevoir le deuxième pion de centrage 116.1' d'un deuxième panneau 84.

Selon une configuration visible sur les figures 5 et 12, au moins un panneau aérodynamique 84 comprend au moins une ouverture 118 traversant le panneau aérodynamique 84 ainsi que, pour chaque ouverture 118, une trappe 120 reliée au panneau aérodynamique 84 par une articulation, mobile entre une position fermée dans laquelle la trappe 120 obture l'ouverture 118 et une position ouverte dans laquelle la trappe 120 dégage au moins partiellement l'ouverture 118, ainsi qu'un système de verrouillage/déverrouillage configuré pour maintenir la trappe 120 en position fermée.

## Revendications

1. Ensemble de propulsion comprenant un carter de soufflante (64) qui s'étend entre des extrémités avant et arrière (64.1, 64.2) ainsi qu'une nacelle (62) qui comprend, d'avant en arrière, une entrée d'air (66) reliée à l'extrémité avant (64.1) du carter de soufflante (64), un tronçon intermédiaire (68) positionné autour du carter de soufflante (64) et un tronçon arrière (70) coopérant avec l'extrémité arrière (64.2) du carter de soufflante (64), le tronçon intermédiaire (68) s'étendant entre un bord avant (68.1) accolé à l'entrée d'air (66) et un bord arrière (68.2) accolé au tronçon arrière (70) et comprenant au moins un panneau aérodynamique (84) qui s'étend du bord avant (68.1) jusqu'au bord arrière (68.2) du tronçon intermédiaire (68) ; **caractérisé en ce que** le tronçon intermédiaire (68) comprend au moins un support radial intermédiaire (86) comportant un bord intérieur (86.1) relié au carter de soufflante (64) et un bord extérieur (86.2) relié au panneau aérodynamique (84), ce dernier comprenant un bord avant (84.1) relié à l'entrée d'air (66) par un premier système de liaison (102).

2. Ensemble de propulsion selon la revendication précédente, **caractérisé en ce que** l'entrée d'air (66) comprend une lèvre (72) située à l'avant, un conduit intérieur (74) qui prolonge la lèvre (72) vers l'intérieur de la nacelle (72), une première paroi extérieure (76) qui prolonge la lèvre (72) vers l'extérieur de la nacelle (62) ainsi qu'un premier cadre annulaire (78) présentant un bord intérieur (78.1) relié au conduit intérieur (74) et un bord extérieur (78.2) relié à la première paroi extérieure (76) et **en ce que** le premier système de liaison (102) comprend au moins un premier rebord (102.1) solidaire du premier cadre annulaire (78), positionné au niveau ou proche du bord extérieur (78.2) du premier cadre annulaire (78), ainsi que plusieurs éléments de liaison (102.2), reliant le panneau aérodynamique (84) et le premier rebord (102.1), répartis sur au moins une partie de la circonférence de la nacelle (62).

3. Ensemble de propulsion selon l'une des revendications précédentes, **caractérisé en ce que** chaque panneau aérodynamique (84) comprend un bord arrière (84.2) relié par un deuxième système de liaison (104) au support radial intermédiaire (86) et **en ce que** le deuxième système de liaison (104) comprend au moins un deuxième rebord (104.1) solidaire du support radial intermédiaire (86), positionné au niveau ou proche du bord extérieur (86.2) du support radial intermédiaire (86), ainsi que plusieurs éléments de liaison (104.2), reliant le panneau aérodynamique (84) et le deuxième rebord (104.1), répartis sur au moins une partie de la circonférence de la nacelle (62).

4. Ensemble de propulsion selon l'une des revendications précédentes, **caractérisé en ce que** le tronçon arrière (70) comprend au moins une deuxième paroi extérieure (80) ainsi qu'au moins un deuxième cadre annulaire (82) présentant un bord intérieur (82.1) qui coopère avec l'extrémité arrière (64.2) du carter de soufflante (64) et un bord extérieur (82.2) relié à la deuxième paroi extérieure (80), **en ce que** le support radial intermédiaire (86) est espacé du deuxième cadre annulaire (82) du tronçon arrière (70) et **en ce que** la deuxième paroi extérieure (80) du tronçon arrière (70) comprend au moins un prolongement (94) qui s'étend à l'avant du deuxième cadre annulaire (82) et présente un bord avant (94.1) faiblement espacé du (ou des) panneau(x) aérodynamique(s) (84).

5. Ensemble de propulsion selon la revendication précédente, **caractérisé en ce que** le prolongement (94) a une forme demi-cylindrique et **en ce que** le tronçon arrière (70) comprend plusieurs équerres (98) reliant le deuxième cadre annulaire (82) et le prolongement (94), réparties sur la circonférence de la nacelle (62).

6. Ensemble de propulsion selon la revendication précédente, **caractérisé en ce que** le support radial intermédiaire (86) comprend une âme (106) positionnée approximativement dans un plan transversal ainsi qu'au moins une aile arrière (108), décalée vers l'arrière par rapport à l'âme (106), formant une surface d'appui pour le prolongement (94) du tronçon arrière (70).

7. Ensemble de propulsion selon la revendication précédente, **caractérisé en ce que** l'ensemble de propulsion (58) comprend au moins un joint d'étanchéité (110) intercalé entre l'aile arrière (108) et le prolongement (94) du tronçon arrière (70).

8. Ensemble de propulsion selon l'une des revendications précédentes, **caractérisé en ce que** le tronçon intermédiaire (68) comprend plusieurs panneaux aérodynamiques (84), accolés les uns aux autres, répartis sur la circonférence de la nacelle (62).

9. Ensemble de propulsion selon la revendication précédente, **caractérisé en ce que** le tronçon intermédiaire (68) comprend au moins un raidisseur longitudinal (112) qui présente une première extrémité (112.1) reliée à l'entrée d'air (66) ainsi qu'une deuxième extrémité (112.2) reliée au support radial intermédiaire (86).

10. Ensemble de propulsion selon la revendication précédente, **caractérisé en ce que** le tronçon intermédiaire (68) comprend autant de raidisseurs longitudinaux (112) que de panneaux aérodynamiques (84), chaque raidisseur longitudinal (112) étant positionné au niveau d'une zone de jonction de deux panneaux aérodynamiques (84) et configuré pour former une surface d'appui à un premier bord longitudinal (84.3) d'un premier panneau aérodynamique (84) et à un deuxième bord longitudinal (84.4) d'un deuxième panneau (84).

11. Ensemble de propulsion selon l'une des revendications précédentes, **caractérisé en ce que** chaque panneau aérodynamique (84) présente une face intérieure (F84) orientée vers le carter de soufflante (64), un bord avant (84.1) positionné dans un premier plan transversal, un bord arrière (84.2) positionné dans un deuxième plan transversal, un premier bord longitudinal (84.3) positionné dans un premier plan longitudinal ainsi qu'un deuxième bord longitudinal (84.4) positionné dans un deuxième plan longitudinal et **en ce que** chaque panneau aérodynamique (84) comprend, au niveau de sa face intérieure (F84), une partie centrale (114) renforcée, espacée des bords (84.1, 84.2, 84.3 et 84.4) et formant une surépaisseur par rapport aux bords (84.1, 84.2, 84.3 et 84.4).

12. Ensemble de propulsion selon l'une des revendications, **caractérisé en ce que** le tronçon intermédiaire (68) comprend, pour chaque panneau aérodynamique (84), au moins un système de centrage (116) configuré pour positionner chaque panneau aérodynamique (84) lors de son montage.

13. Ensemble de propulsion selon la revendication précédente, **caractérisé en ce que** le système de centrage (116) comprend, pour chaque panneau aérodynamique (84), au moins un pion de centrage (116.1) solidaire du panneau aérodynamique (84) ainsi que, pour chaque pion de centrage (116.1), au moins un orifice de centrage, configuré pour coopérer avec le pion de centrage (116), prévu au niveau d'un élément solidaire du carter de soufflante (64).

14. Ensemble de propulsion selon l'une des revendications précédentes, **caractérisé en ce que** le support radial intermédiaire (86) s'étend sur toute la circonférence de la nacelle (62) et comprend plusieurs évidements (88).

15. Aéronef comprenant au moins un ensemble de propulsion selon l'une des revendications précédentes.
